# EUROPEAN PATENT SPECIFICATION

(11) **EP 3 677 766 B1**
(45) Date of publication and mention of the grant of the patent: **06.10.2021**
(21) Application number: 19170385.9
(22) Date of filing: 19.04.2019
(51) Int. Cl.: F02K 9/52, F02K 9/72

(54) **OXIDIZER INJECTOR FOR MOTOR**
OXIDATIONSMITTELINJEKTOR FÜR EINEN MOTOR
INJECTEUR D'OXYDANT POUR MOTEUR

(30) Priority: 04.01.2019 TW 108100310
(43) Date of publication of application: 08.07.2020
(73) Proprietor: Taiwan Innovative Space, Inc., Miaoli County 35059 (TW)
(72) Inventor: CHEN, Yen-Sen, 35059 MIAOLI COUNTY (TW)
(74) Representative: Lang, Christian

(56) References cited:
- CN-A- 105 020 050
- GB-A- 1 450 379
- JP-A- 2011 001 904
- US-A- 3 423 943
- US-A1- 2013 074 472

## Description

### BACKGROUND OF THE INVENTION

### Field of Invention

The present invention relates to a motor, and more particularly to an oxidizer injector for a motor of a hybrid rocket engine.

### Related Art

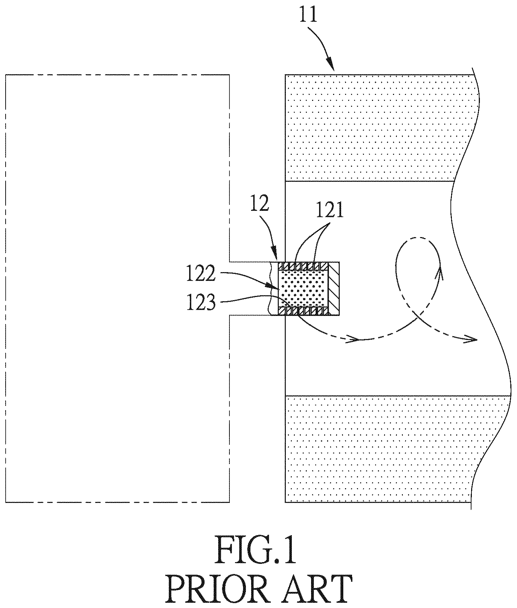

The main structure of a rocket is shown in FIG. 1, which mainly comprises a combustion chamber 11 and an oxidizer injector 12, the oxidizer injector 12 is disposed at one end of the combustion chamber 11, and the oxidizer injector 12 injects propellant mixture into the combustion chamber 11, thereby providing the rocket with propulsion by combustion of propellant mixture in the combustion chamber 11. In particular, the types of the oxidizer injector 12 include axial injector, shower head injector, swirl injector, and needle injector; among the various types, the swirl injector has the best combustion mixing efficiency.

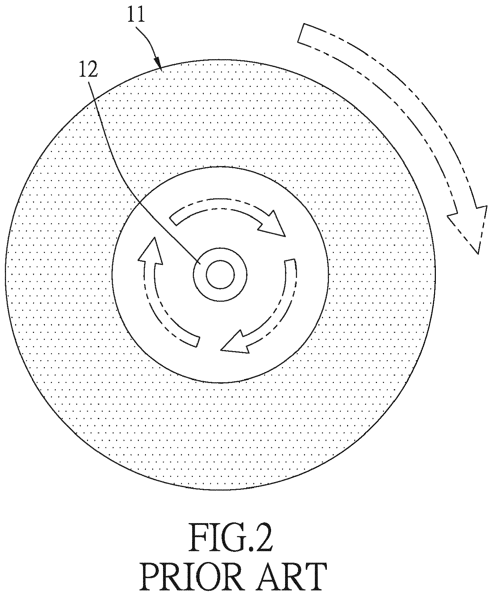

Referring to FIG. 1 and FIG. 2, the oxidizer injector 12 of the swirl injector is provided with a plurality of runners 121, and each of the runners 121 is respectively communicated with a feed passage 122. The oxidizer injector 12 has an inner wall surface 123 facing the feed passage 122, and an acute angle is between each of the runners 121 and the inner wall surface 123, so that each of the runners 121 is arranged obliquely clockwise around the feed passage 122 as a center.

When oxidizer is fed into the swirl injector from the feed passage 122, the oxidizer is injected from each of the runners 121, and by having each of the runners 121 obliquely disposed on the oxidizer injector 12, the injected oxidizer exhibits a swirling state in the combustion chamber 11.

However, during the flight of the rocket, the oxidizer swirling in a same direction will give the rocket an axial torsion during liftoff, resulting in that an additional flight control system is required for the rocket, which not only complicates the overall structure of the rocket, but also the costs are very high.

Patent specification GB 1450379 A discloses a motor of a hybrid rocket engine according to the prior art. An online adjustable gas generator adopting a jet collision combustion method is known from patent application publication CN 105020050 A.

### SUMMARY OF THE INVENTION

An objective of the present invention is to solve the problem that the swirl injector generates axial torsion during the injection of liquid fuel, thereby improving the propulsion performance of hybrid rocket engine.

In order to achieve the aforementioned objective, the present invention provides an oxidizer injector for a motor of a hybrid rocket engine having the features of claim 1. Further embodiments are subject-matter of the dependent claims. The oxidizer injector comprises:
a body having a feed passage as well as a first runner assembly and a second runner assembly which communicate with the feed passage, the feed passage having an axis, the first runner assembly and the second runner assembly being sequentially arranged along the axis, the first runner assembly having a plurality of forward runners, and the second runner assembly having a plurality of reverse runners, each of the forward runners being disposed along a forward running direction, the forward running direction is configured to introduce a forward swirl, and each of the reverse runners being disposed along a reverse running direction, the reverse running direction is configured to introduce a reverse swirl, one of the forward running directions being defined as a first forward running direction, and one of the reverse running directions being defined as a first reverse running direction, the first forward running direction and the first reverse running direction extending and a position of intersection of the first forward running direction and the first reverse running direction in the direction of axis being an intersection point, and an extending direction of the intersection point to the axis being a central axis, the first forward runner being on one side of the central axis, and the first reverse runner being on another side of the central axis, a forward angle being formed between the first forward running direction and the central axis, a reverse angle being formed between the first reverse running direction and the central axis, and an absolute value of the forward angle and an absolute value of the reverse angle being equal.

In order to achieve the aforementioned objective, the present invention provides an embodiment of the oxidizer injector for a motor of a hybrid rocket engine, comprising:
a body having a feed passage as well as a first runner assembly and a second runner assembly communicating with the feed passage, the feed passage having an axis, the first runner assembly and the second runner assembly being sequentially arranged along the axis, the first runner assembly having a plurality of forward runners, and the second runner assembly having a plurality of reverse runners, the forward runners being inclined in a clockwise direction along the axis, and the reverse runners being inclined in a counterclockwise direction along the axis, one of the forward running directions being defined as a first forward running direction, and one of the reverse running directions being defined as a first reverse running direction, the first forward running direction and the first reverse running direction extending and a position of intersection being an intersection point, and an extending direction of the intersection point to the axis being a central axis, a forward angle being formed between the first forward running direction and the central axis, a reverse angle being formed between the first reverse running direction and the central axis, and an absolute value of the forward angle and an absolute value of the reverse angle being equal.

In order to achieve the aforementioned objective, the present invention provides a further oxidizer injector for a motor of a hybrid rocket engine having the features of claim 3. A further embodiment of this oxidizer injector is subject-matter of claim 4. The oxidizer injector comprises:
a body having a feed passage, a plurality of communication holes penetrating the feed passage, a first runner assembly and a second runner assembly, wherein each of the forward runners and the reverse runners extends along the radial direction of the body, a plurality of first through pipes and a plurality of second through pipes are respectively connected to an outer wall surface of the body, each of the first through pipes communicates with each of the forward runners respectively, and is disposed along the first forward running direction, each of the second through pipes communicates with each of the reverse runners, and is disposed along the first reverse running direction, the feed passage having an axis, the first forward running direction and the first reverse running direction extending and a position of intersection being an intersection point, and an extending direction of the intersection point to the axis being a central axis, a forward angle being formed between the first forward running direction and the central axis, a reverse angle being formed between the first reverse running direction and the central axis, and an absolute value of the forward angle and an absolute value of the reverse angle being equal.

Preferably, the absolute value of the forward angle and the absolute value of the reverse angle are between 20 and 80 degrees.

Preferably, the body has an inner wall surface facing the feed passage, an injection angle is formed between each of the forward runners and the inner wall surface, as well as between each of the reverse runners and the inner wall surface, the injection angle is located on a side close to the combustion chamber, and the injection angle is between 20 and 90 degrees.

Preferably, the combustion chamber has a bulkhead surrounding and defining a combustion port, one end of the bulkhead is disposed with an oxidizer injector, and another end opposite to the oxidizer injector is disposed with a nozzle, and a direction of the oxidizer injector extending to the nozzle is an axis. A solid fuel segment is installed in the combustion port and located on the bulkhead, on the solid fuel segment is disposed with a plurality of protrusions along the axis, the protrusion has a protrusion top surface, and a first distance is between the protrusion top surface and the bulkhead. A recess is formed between each of the two protrusions, the recess has a recess top surface, a second distance is between the recess top surface and the bulkhead, and the first distance is greater than the second distance.

Preferably, the nozzle has a nozzle throat, the nozzle throat has a radial length extending along a radial direction, a length of the first distance is 10% to 50% of the radial length.

Preferably, each of the protrusion top surfaces respectively has a first length along the extending direction, and one end of the combustion chamber extends to another end is a second length, and a total length of the first lengths is 5% to 25% of a total length of the second length.

Preferably, the absolute value of the forward angle and the absolute value of the reverse angle are between 20 and 80 degrees. The body has an inner wall surface facing the feed passage, an injection angle is formed between each of the forward runners and the inner wall surface, as well as between each of the reverse runners and the inner wall surface, the injection angle is located on a side close to the combustion chamber, and the injection angle is between 20 and 90 degrees.

The oxidizer injectors for a motor of a hybrid rocket engine according to the present invention are suitable for being used in a combustion chamber, wherein
a body having a first runner assembly and a second runner assembly, the first runner assembly injecting oxidizer into the combustion chamber to form a forward swirl, and the second runner assembly injecting oxidizer into the combustion chamber to form a reverse swirl, the axial torsion generated by the forward swirl and the axial torsion generated by the reverse swirl counteracting each other.

After oxidizer is fed into the feed passage, the oxidizer flows from the feed passage to the forward runners and the reverse runners and injects from the forward runners and the reverse runners, the oxidizer injected by the forward runners forms a forward swirl in the combustion chamber, and the oxidizer injected by the reverse runners forms a reverse swirl in the combustion chamber, thereby the axial torsion generated by the forward swirl and the axial torsion generated by the reverse swirl counteract each other to solve the problem of axial torsion imbalance in the combustion chamber.

### BRIEF DESCRIPTION OF THE DRAWINGS

FIG. 1 is a schematic diagram of the structure of a conventional oxidizer injector and the injection swirl;
FIG. 2 is a schematic diagram of the swirl of a conventional oxidizer injector;
FIG. 3 is a perspective view of the present invention;
FIG. 4 is a cross-sectional view of the present invention;
FIG. 5 is a cross-sectional view taken along line 5-5 of FIG. 3;
FIG. 6 is a cross-sectional view taken along line 6-6 of FIG. 3;
FIG. 7 is a perspective view of first runners and second runners in a first embodiment;
FIG. 8 is a perspective view of the first runners and the second runners in a second embodiment;
FIG. 9 is a schematic view of the swirl of injection of oxidizer into a combustion chamber in the first embodiment and the second embodiment;
FIG. 10 is a perspective view of the first runners and the second runners in a third embodiment; and
FIG. 11 is a cross-sectional view of the combustion chamber in a fourth embodiment.

### DETAILED DESCRIPTION OF THE INVENTION

The foregoing and other technical contents, features and effects of the present invention to achieve the above objective will be clearly presented in the following detailed description of the preferred embodiments with reference to the drawings.

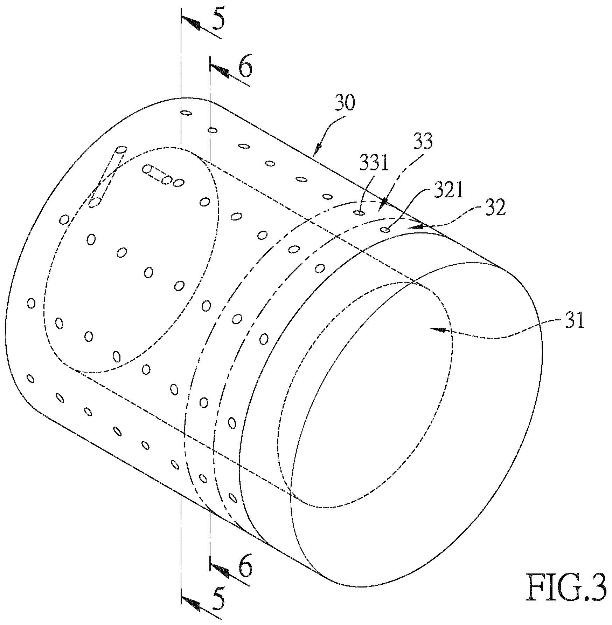

Referring to FIG. 3 to FIG. 7, the present invention is an oxidizer injector for a motor of a hybrid rocket engine, which is suitable for using in a combustion chamber 20 with a combustion port 21 therein, and the oxidizer injector for a motor of a hybrid rocket engine comprises the following.

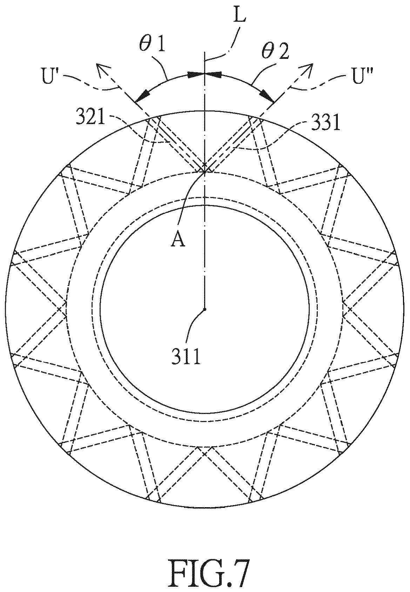

A body 30 has a feed passage 31 as well as a first runner assembly 32 and a second runner assembly 33 communicating with the feed passage 31. The feed passage 31 has an axis 311, the first runner assembly 32 and the second runner assembly 33 are sequentially arranged along the axis 311. The first runner assembly 32 has a plurality of forward runners 321, and the second runner assembly 33 has a plurality of reverse runners 331, each of the forward runners 321 is disposed along a forward running direction U', the forward runners 321 are configured to introduce a forward swirl, each of the reverse runners 331 is disposed along a reverse running direction U", and the reverse runners 331 are configured to introduce a reverse swirl. The first forward running direction U' and the first reverse running direction U" extend and a position of intersection of the first forward running direction U' and the first reverse running direction U" in the direction of axis 311 is an intersection point A, as shown in Fig. 7, and an extending direction in which the intersection point A extends to the axis 311 is a central axis L (the central axis L extends in the radial direction of the feed passage 31 and is perpendicular to the axis 311), the first forward runner 321 is located at one side of the central axis L of the body 30, and the first reverse runner 331 is located at another side of the central axis L of the body 30. A forward angle θ1 is formed between the first forward running direction U' and the central axis L, a reverse angle θ2 is formed between the first reverse running direction U" and the central axis L, and an absolute value of the forward angle θ1 and an absolute value of the reverse angle θ2 are equal.

In particular, the absolute value of the forward angle θ1 and the absolute value of the reverse angle θ2 are between 20 and 80 degrees to obtain an optimum combustion efficiency.

In a first embodiment, quantities of the first runner assembly 32 and the second runner assembly 33 are plural, and each of the first runner assemblies 32 and each of the second runner assemblies 33 are arranged in a staggered manner along an extending direction of the axis 311.

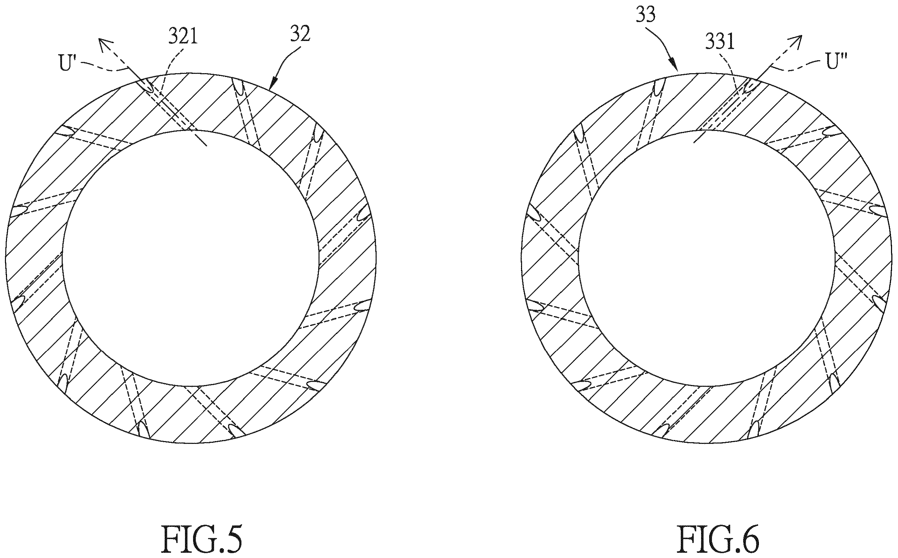

Referring to FIG. 5 and FIG. 6, each of the forward runners 321 is inclined counterclockwise about the axis 311, and each of the reverse runners 331 is inclined clockwise about the axis 311.

In particular, referring to FIG. 7, one end of the first forward runner 321 and one end of the first reverse runner 331 overlap at the direction of the axis 311, and an overlapping position of the first forward running direction U' of the first forward runner 321 and the first reverse running direction U" of the first reverse runner 331 in the direction of the axis 311 is the intersection point A.

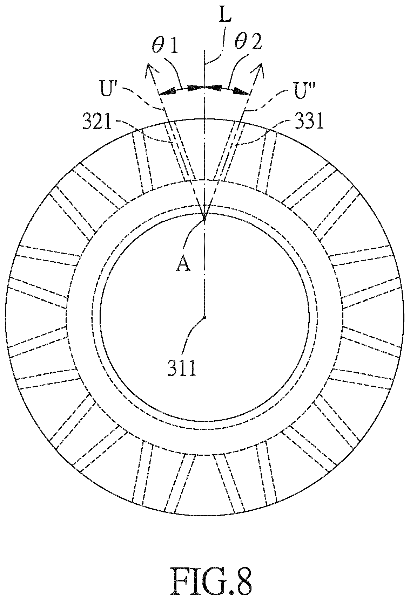

Please refer to FIG. 8 for a second embodiment, one end of the first forward runner 321 and one end of the first reverse runner 331 do not overlap at the direction of the axis 311. However, the first forward runner 321 extends along the first forward running direction U'. The first forward running direction U' and the first reverse running direction U" extend and a position of intersection is the intersection point A.

The above is the structural configuration and the connection relationship of the first embodiment and the second embodiment of the present invention, and the mode of use of the present invention is as follows.

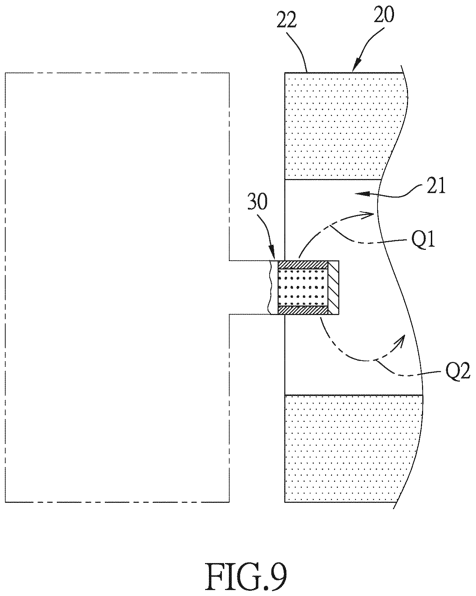

Referring to FIG. 9, oxidizer is fed into the feed passage 31, the oxidizer flows from the feed passage 31 to the forward runners 321 and the reverse runners 331 and injects from the forward runners 321 and the reverse runners 331, the oxidizer injected by the forward runner 321 forms a forward swirl Q1 in the combustion chamber 20, and the oxidizer injected by the reverse runner 331 forms a reverse swirl Q2 in the combustion chamber 20, thereby the axial torsion generated by the forward swirl Q1 and the axial torsion generated by the reverse swirl Q2 counteract each other to solve the problem of axial torsion imbalance in the combustion chamber 20.

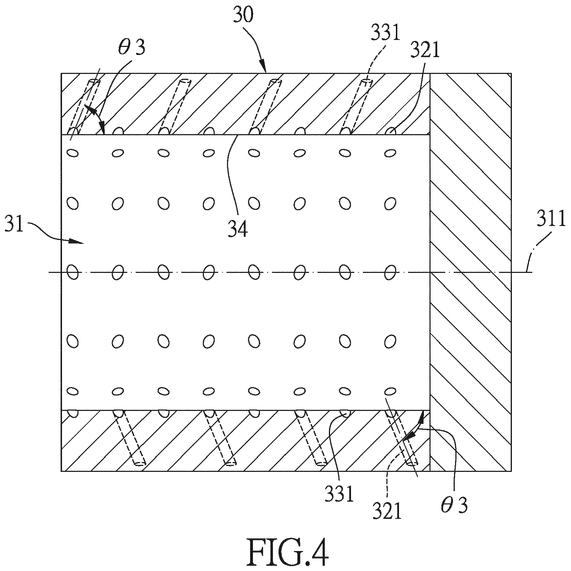

In particular, referring to FIG. 4, the body 30 has an inner wall surface 34 facing the feed passage 31, an injection angle θ3 is formed between each of the forward runners 321 and the inner wall surface 34, as well as between each of the reverse runners 331 and the inner wall surface 34, the injection angle θ3 is located on a side close to the combustion chamber 20, and the injection angle θ3 is between 20 and 90 degrees, and the injection angles θ3 are equal to obtain an optimum combustion efficiency.

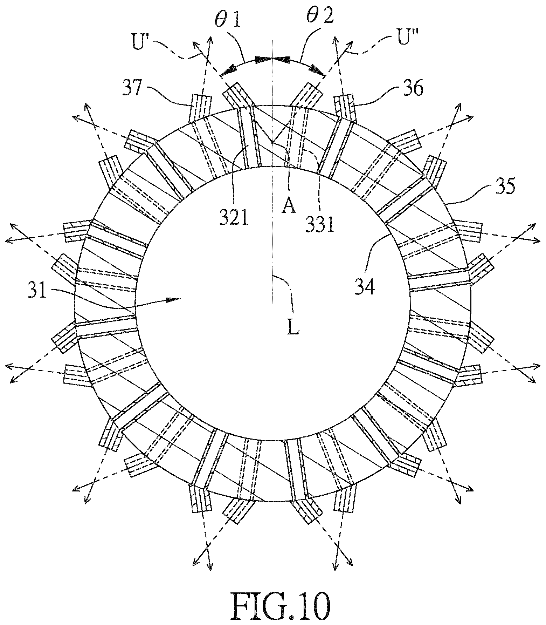

Referring to FIG. 10, in a third embodiment of the present invention, each of the forward runners 321 and the reverse runners 331 extends along the radial direction of the body 30. A plurality of first through pipes 36 and a plurality of second through pipes 37 are respectively connected to an outer wall surface 35 of the body 30. Each of the first through pipes 36 communicates with each of the forward runners 321 respectively, and is disposed along the first forward running direction U'. Each of the second through pipes 37 communicates with each of the reverse runners 331, and is disposed along the first reverse running direction U".

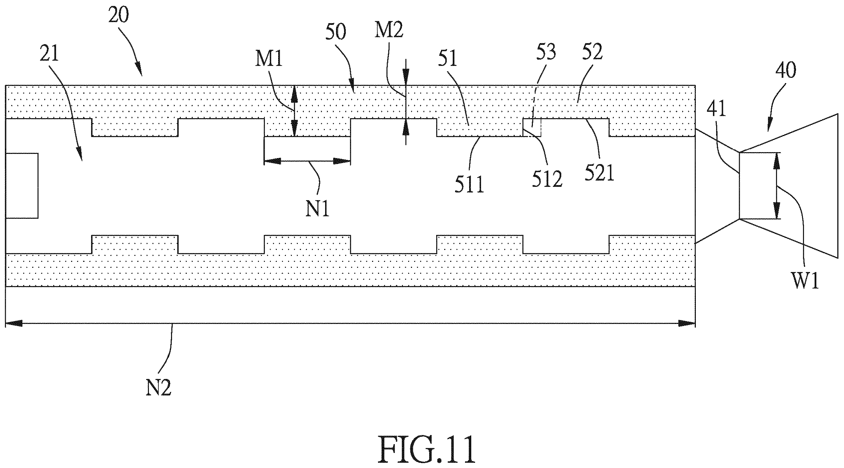

Referring to FIG. 11, in a fourth embodiment, which is a motor of a hybrid rocket engine, wherein the combustion chamber 20 has a bulkhead 22 surrounding and defining a combustion port 21, one end of the bulkhead 22 is disposed with the oxidizer injector, and another end opposite to the oxidizer injector is disposed with a nozzle 40, and a direction of the oxidizer injector extending to the nozzle 40 is the axis 311.

The solid fuel segment 50 is installed in the combustion port 21 and located on the bulkhead 22, on the solid fuel segment 50 is disposed with a plurality of protrusions 51 along the axis 311, the protrusion 51 has a protrusion top surface 511, a first distance M1 is between the protrusion top surface 511 and the bulkhead 22, and a recess 52 is formed between the each two protrusions 51, the recess 52 has a recess top surface 521, a second distance M2 is between the recess top surface 521 and the bulkhead 22, and the first distance M1 is greater than the second distance M2. Each of the protrusions 51 respectively has a diffusion flame surface 512 facing the nozzle 40, and a flame holding hot-gas region 53 is formed between each of the diffusion flame surfaces 512 and the connected recess top surface 521, respectively. When the propellant mixture is burned in the combustion chamber 21, since the solid fuel segment 50 has the protrusions 51, when the propellant mixture passes through the flame holding hot-gas region 53, eddies are formed in the flame holding hot-gas region 53, so that the propellant mixture has a better mixing and combustion efficiency as it passes through the flame holding hot-gas region 53, thereby allowing the solid fuel segment 50 to have an even regression rate.

Preferably, the nozzle 40 has a nozzle throat 41, the nozzle throat 41 has a radial length W1 extending along a radial direction, and a length of the first distance M1 is 1 0% to 50% of the radial length W1.

Preferably, each of the protrusion top surfaces 511 respectively has a first length N1 along the extending direction, and one end of the combustion chamber 20 extends to another end is a second length N2, and a total length of the first lengths N1 is 5% to 25% of a total length of the second length N2.

In summary, the above embodiments and drawings are merely the preferred embodiments of the present invention, and the scope of implementation of the present invention is only limited by the appended claims.

## Claims

1. An oxidizer injector for a motor of a hybrid rocket engine, comprising:
a body (30) having a feed passage (31) as well as a first runner assembly (32) and a second runner assembly (33) which communicate with the feed passage (31), the feed passage (31) having an axis (311), the first runner assembly (32) and the second runner assembly (33) being sequentially arranged along the axis (311), the first runner assembly (32) having a plurality of forward runners (321), and the second runner assembly (33) having a plurality of reverse runners (331), each of the forward runners (321) being disposed along a forward running direction (U'), and each of the reverse runners (331) being disposed along a reverse running direction (U"), one of the forward running directions (U') being defined as a first forward running direction (U'), and one of the reverse running directions (U") being defined as a first reverse running direction (U"), the first forward running direction (U') and the first reverse running direction (U") extending and a position of intersection of the first forward running direction (U') and the first reverse running direction (U") in the direction of axis (311)_being an intersection point (A), and an extending direction of the intersection point (A) to the axis (311) being a central axis (L), the first forward runner (321) being located at one side of the central axis (L) of the body (30), and the first reverse runner (331) being located at another side of the central axis (L) of the body (30), a forward angle (θ1) being formed between the first forward running direction (U') and the central axis (L), a reverse angle (θ2) being formed between the first reverse running direction (U") and the central axis (L), and an absolute value of the forward angle (θ1) and an absolute value of the reverse angle (θ2) being equal, wherein the body (30) has an inner wall surface (34) facing the feed passage (31), an injection angle (θ3) is formed between each of the forward runners (321) and the inner wall surface (34), as well as between each of the reverse runners (331) and the inner wall surface (34), and the injection angles (θ3) are located on a side close to the combustion chamber (20) when the oxidizer injector is mounted in the motor of the hybrid rocket engine,
wherein each of the forward runners (321) is configured to introduce a forward swirl and each of the reverse runners (331) is configured to introduce a reverse swirl, wherein the injection angles (θ3) are equal.

2. The oxidizer injector for a motor of a hybrid rocket engine as claimed in claim 1, **characterized in that**:
the forward runners (321) are inclined in a clockwise direction along the axis (311), and the reverse runners (331) are inclined in a counterclockwise direction along the axis (311).

3. An oxidizer injector for a motor of a hybrid rocket engine, comprising
a body (30) having a feed passage (31), a plurality of communication holes penetrating the feed passage (31), a first runner assembly (32) and a second runner assembly (33), wherein the first runner assembly (32) has a plurality of forward runners (321) and the second runner assembly (33) has a plurality of reverse runners (331), each of the forward runners (321) and the reverse runners (331) extends along the radial direction of the body (30), wherein a plurality of first through pipes (36) and a plurality of second through pipes (37) are respectively connected to an outer wall surface (35) of the body (30), each of the first through pipes (36) communicates with each of the forward runners (321) respectively, and is disposed along a first forward running direction (U'), each of the second through pipes (37) communicates with each of the reverse runners (331), and is disposed along a first reverse running direction (U"), the feed passage (31) having an axis (311), the first forward running direction (U') and the first reverse running direction (U") extending and a position of intersection in the direction of axis (311)_being an intersection point (A), and an extending direction of the intersection point (A) to the axis (311) being a central axis (L), a forward angle (θ1) being formed between the first forward running direction (U') and the central axis (L), a reverse angle (θ2) being formed between the first reverse running direction (U") and the central axis (L), and an absolute value of the forward angle (θ1) and an absolute value of the reverse angle (θ2) being equal.

4. The oxidizer injector for a motor of a hybrid rocket engine as claimed in claim 1, 2 or 3, wherein the absolute value of the forward angle (θ1) and the absolute value of the reverse angle (02) are between 20 and 80 degrees.

5. The oxidizer injector for a motor of a hybrid rocket engine as claimed in claim 1 or 2, wherein the injection angle (θ3) is between 20 and 90 degrees.

6. The oxidizer injector for a motor of a hybrid rocket engine as claimed in claim 1 or 2, wherein a combustion chamber (20) has a bulkhead (22) surrounding and defining a combustion port (21), one end of the bulkhead (22) is disposed with an oxidizer injector, and another end opposite to the oxidizer injector is disposed with a nozzle (40), a direction of the oxidizer injector extending to the nozzle (40) is an axis (311); a solid fuel segment (50) is installed in the combustion port (21) and located on the bulkhead (22), on the solid fuel segment (50) is disposed with a plurality of protrusions (51) along the axis (311), the protrusion (51) has a protrusion top surface (511), and a first distance (M1) is between the protrusion top surface (511) and the bulkhead (22), a recess (52) is formed between the each two protrusions (51), the recess (52) has a recess top surface (521), a second distance (M2) is between the recess top surface (521) and the bulkhead (22), and the first distance (M1) is greater than the second distance (M2) .

7. The oxidizer injector for a motor of a hybrid rocket engine as claimed in claim 6, wherein the nozzle (40) has a nozzle throat, the nozzle throat has a radial length (W1) extending along a radial direction, a length of the first distance (M1) is 10% to 50% of the radial length (W1).

8. The oxidizer injector for a motor of a hybrid rocket engine as claimed in claim 6, wherein each of the protrusion top surfaces (511) respectively has a first length (N1) along the extending direction, and one end of the combustion chamber (20) extends to another end is a second length (N2), and a total length of the first lengths (N1) is 5% to 25% of a total length of the second length (N2).

9. The oxidizer injector for a motor of a hybrid rocket engine as claimed in claim 6, wherein the absolute value of the forward angle (θ1) and the absolute value of the reverse angle (θ2) are between 20 and 80 degrees; the body (30) has an inner wall surface (34) facing the feed passage (31), and the injection angle (θ3) is between 20 and 90 degrees.

## Patentansprüche

1. Oxidationsmittelinjektor für einen Motor eines Hybridraketentriebwerks, umfassend:
einen Körper (30) mit einem Zuführungsdurchgang (31) sowie einer ersten Läuferanordnung (32) und einer zweiten Läuferanordnung (33), welche mit dem Zuführungsdurchgang (31) in Verbindung stehen, wobei der Zuführungsdurchgang (31) eine Achse (311) aufweist, wobei die erste Läuferanordnung (32) und die zweite Läuferanordnung (33) aufeinanderfolgend entlang der Achse (311) angeordnet sind, wobei die erste Läuferanordnung (32) eine Mehrzahl von Vorwärtsläufer (321) und die zweite Läuferanordnung (33) eine Mehrzahl von Rückwärtsläufer (331) aufweist, wobei jeder der Vorwärtsläufer (321) entlang einer Vorwärtslaufrichtung (U') und jeder der Rückwärtsläufer (331) entlang einer Rückwärtslaufrichtung (U") angeordnet ist, wobei eine der Vorwärtslaufrichtungen (U') als eine erste Vorwärtslaufrichtung (U') definiert ist und eine der Rückwärtslaufrichtungen (U") als eine erste Rückwärtslaufrichtung (U") definiert ist, wobei sich die erste Vorwärtslaufrichtung (U') und die erste Rückwärtslaufrichtung (U") erweitern und eine Schnittpunktposition der ersten Vorwärtslaufrichtung (U') und der ersten Rückwärtslaufrichtung (U") in Richtung der Achse (311) ein Schnittpunkt (A) ist, wobei eine Erstreckungsrichtung des Schnittpunkts (A) zur Achse (311) eine Mittelachse (L) ist, wobei der erste Vorwärtsläufer (321) an einer Seite der Mittelachse (L) des Körpers (30) angeordnet ist, wobei der erste Rückwärtsläufer (331) an einer anderen Seite der Mittelachse (L) des Körpers (30) angeordnet ist, wobei ein Vorwärtswinkel (θ1) zwischen der ersten Vorwärtslaufrichtung (U') und der Mittelachse (L) gebildet wird, wobei ein Rückwärtswinkel (θ2) zwischen der ersten Rückwärtslaufrichtung (U") und der Mittelachse (L) gebildet wird, wobei ein Absolutwert des Vorwärtswinkels (θ1) und ein Absolutwert des Rückwärtswinkels (θ2) gleich sind, wobei der Körper (30) eine Innenwandfläche (34) aufweist, die dem Zuführungsdurchgang (31) zugewandt ist, einen Einspritzwinkel (θ3) gebildet zwischen jedem der Vorwärtsläufer (321) und der Innenwandfläche (34), sowie zwischen jedem der Rückwärtsläufer (331) und der Innenwandfläche (34), sowie die Einspritzwinkel (θ3), welche sich auf einer Seite nahe der Brennkammer (20) befinden, wenn der Oxidationsmittelinjektor im Motor des Hybridraketentriebwerks montiert ist, wobei jeder der Vorwärtsläufer (321) so konfiguriert ist, dass er einen Vorwärtsdrall einleitet und jeder der Rückwärtsläufer (331) so konfiguriert ist, dass er einen Rückwärtsdrall einleitet, wobei die Einspritzwinkel (θ3) gleich sind.

2. Oxidationsmittelinjektor für einen Motor eines Hybridraketentriebwerks nach Anspruch 1, **dadurch gekennzeichnet, dass**
die Vorwärtsläufer (321) in einer Richtung im Uhrzeigersinn entlang der Achse (311) geneigt sind, sowie die Rückwärtsläufer (331) in einer Richtung gegen den Uhrzeigersinn entlang der Achse (311) geneigt sind.

3. Oxidationsmittelinjektor für einen Motor eines Hybridraketentriebwerks, umfassend:
einen Körper (30) mit einem Zuführungsdurchgang (31), einer Vielzahl von Verbindungslöchern, welche den Zuführungsdurchgang (31) durchdringen, eine erste Läuferanordnung (32) und eine zweite Läuferanordnung (33), wobei die erste Läuferanordnung (32) eine Vielzahl von Vorwärtsläufer (321) aufweist und die zweite Läuferanordnung (33) eine Vielzahl von Rückwärtsläufer (331) aufweist, wobei jeder der Vorwärtsläufer (321) und der Rückwärtsläufer (331) sich entlang der radialen Richtung des Körpers (30) erstreckt, wobei eine Mehrzahl von ersten Durchgangsrohren (36) und eine Mehrzahl von zweiten Durchgangsrohren (37) jeweils mit einer Außenwandfläche (35) des Körpers (30) verbunden sind, wobei jedes der ersten Durchgangsrohre (36) jeweils mit jedem der Vorwärtsläufer (321) in Verbindung steht und entlang einer ersten Vorwärtslaufrichtung (U') angeordnet ist, wobei jedes der zweiten Durchgangsrohre (37) mit jedem der Rückwärtsläufer (331) in Verbindung steht und entlang einer ersten Rückwärtslaufrichtung (U") angeordnet ist, wobei der Zuführungsdurchgang (31) eine Achse (311) aufweist, wobei sich die erste Vorwärtslaufrichtung (U') und die erste Rückwärtslaufrichtung (U") erweitern und eine Schnittpunktposition in der Richtung der Achse (311) ein Schnittpunkt (A) ist, wobei eine Erstreckungsrichtung des Schnittpunkts (A) zur Achse (311) eine Mittelachse (L) ist, wobei zwischen der ersten Vorwärtslaufrichtung (U') und der Mittelachse (L) ein Vorwärtswinkel (θ1) gebildet ist, zwischen der ersten Rückwärtslaufrichtung (U") und der Mittelachse (L) ein Rückwärtswinkel (θ2) gebildet ist und ein Absolutwert des Vorwärtswinkels (θ1) und ein Absolutwert des Rückwärtswinkels (θ2) gleich sind.

4. Oxidationsmittelinjektor für einen Motor eines Hybridraketentriebwerks nach Anspruch 1, 2 oder 3, wobei der Absolutwert des Vorwärtswinkels (θ1) und der Absolutwert des Rückwärtswinkels (θ2) zwischen 20 und 80 Grad liegen.

5. Oxidationsmittelinjektor für einen Motor eines Hybridraketentriebwerks nach Anspruch 1 oder 2, wobei der Einspritzwinkel (θ3) zwischen 20 und 90 Grad liegt.

6. Oxidationsmittelinjektor für einen Motor eines Hybridraketentriebwerks nach Anspruch 1 oder 2, wobei eine Brennkammer (20) eine Trennwand (22) aufweist, welches eine Verbrennungsöffnung (21) umgibt und definiert, wobei ein Ende der Trennwand (22) mit einem Oxidationsmittelinjektor angeordnet ist und ein anderes, dem Oxidationsmittelinjektor gegenüberliegendes Ende mit einer Düse (40) angeordnet ist, wobei eine Richtung des Oxidationsmittelinjektors, welche sich zu der Düse (40) erstreckt, eine Achse (311) bildet; wobei ein Festbrennstoffsegment (50) in der Verbrennungsöffnung (21) installiert ist und an der Trennwand (22) angeordnet ist, wobei an dem Festbrennstoffsegment (50) mit einer Vielzahl von Vorsprüngen (51) entlang der Achse (311) angeordnet ist, wobei der Vorsprung (51) eine Vorsprungsoberseite (511) aufweist, wobei ein erster Abstand (M1) zwischen der Oberseite (511) des Vorsprungs und der Trennwand (22) liegt, wobei eine Ausnehmung (52) zwischen den beiden Vorsprüngen (51) ausgebildet ist, wobei die Ausnehmung (52) eine Oberseite (521) aufweist, wobei ein zweiter Abstand (M2) zwischen der Oberseite (521) der Ausnehmung und der Trennwand (22) liegt, wobei der erste Abstand (M1) größer als der zweite Abstand (M2) ist.

7. Oxidationsmittelinjektor für einen Motor eines Hybridraketentriebwerks nach Anspruch 6, wobei die Düse (40) einen Düsenhals aufweist, der Düsenhals eine radiale Länge (W1) aufweist, welche sich entlang einer radialen Richtung erstreckt, wobei eine Länge des ersten Abstands (M1) 10% bis 50% der radialen Länge (W1) beträgt.

8. Oxidationsmittelinjektor für einen Motor eines Hybridraketentriebwerks nach Anspruch 6, wobei jede der vorstehenden Oberseiten (511) jeweils eine erste Länge (N1) entlang der Erstreckungsrichtung aufweist und ein Ende der Brennkammer (20), welche sich zu einem anderen Ende erstreckt und eine zweite Länge (N2) aufweist, wobei eine Gesamtlänge der ersten Längen (N1) 5% bis 25% einer Gesamtlänge der zweiten Länge (N2) beträgt.

9. Oxidationsmittelinjektor für einen Motor eines Hybridraketentriebwerks nach Anspruch 6, wobei der Absolutwert des Vorwärtswinkels (θ1) und der Absolutwert des Rückwärtswinkels (θ2) zwischen 20 und 80 Grad liegen; der Körper (30) eine Innenwandfläche (34) aufweist, welche dem Zuführungsdurchgang (31) gegenüberliegt, und der Einspritzwinkel (θ3) zwischen 20 und 90 Grad liegt.

## Revendications

1. Injecteur d'oxydant pour un moteur d'un moteur-fusée hybride, comprenant:
un corps (30) présentant un passage d'alimentation (31) ainsi qu'un premier ensemble de canaux d'injection secondaires (32) et un second ensemble de canaux d'injection secondaires (33) qui communiquent avec le passage d'alimentation (31), le passage d'alimentation (31) présentant un axe (311), le premier ensemble de canaux d'injection secondaires (32) et le second ensemble de canaux d'injection secondaires (33) étant agencés séquentiellement le long de l'axe (311), le premier ensemble de canaux d'injection secondaires (32) présentant une pluralité de canaux d'injection secondaires vers l'avant (321), et le second ensemble de canaux d'injection secondaires (33) présentant une pluralité de de canaux d'injection secondaires vers l'arrière (331), chacun des canaux d'injection secondaires vers l'avant (321) étant disposé le long d'une direction d'injection vers l'avant (U'), et chacun des canaux d'injection secondaires vers l'arrière (331) étant disposé le long d'une direction d'injection vers l'arrière (U"), l'une des directions d'injection vers l'avant (U') étant définie comme une première direction d'injection vers l'avant (U'), et l'une des directions d'injection vers l'arrière (U") étant définie comme une première direction d'injection vers l'arrière (U"), la première direction d'injection vers l'avant (U') et la première direction d'injection vers l'arrière (U") s'étendant et une position d'intersection de la première direction d'injection vers l'avant (U') et de la première direction d'injection vers l'arrière (U") dans la direction d'axe (311) étant un point d'intersection (A), et une direction d'extension du point d'intersection (A) par rapport à l'axe (311) étant une axe central (L), le premier canal d'injection secondaire vers l'avant (321) étant situé d'un côté de l'axe central (L) du corps (30), et le premier canal d'injection secondaire vers l'arrière (331) étant situé d'un autre côté de l'axe central (L) du corps (30), un angle vers l'avant (θ1) étant formé entre la première direction d'injection vers l'avant (U') et l'axe central (L), un angle vers l'arrière (θ2) étant formé entre la première direction d'injection vers l'arrière (U") et l'axe central (L), et une valeur absolue de l'angle avant (θ1) et une valeur absolue de l'angle arrière (θ2) étant égales, dans lequel le corps (30) présente une surface de paroi intérieure (34) faisant face au passage d'alimentation (31), un angle d'injection (θ3) est formé entre chacun des canaux d'injection secondaires vers l'avant (321) et la surface de paroi intérieure (34), ainsi qu'entre chacun des canaux d'injection secondaires vers l'arrière (331) et la surface de paroi intérieure (34), et les angles d'injection (θ3) sont situés sur un côté proche de la chambre de combustion (20) lorsque l'injecteur d'oxydant est monté dans le moteur du moteur-fusée hybride,
dans lequel chacun des canaux d'injection secondaires vers l'avant (321) est configuré pour introduire un tourbillon vers l'avant et chacun des canaux d'injection secondaires vers l'arrière (331) est configuré pour introduire un tourbillon vers l'arrière, dans lequel les angles d'injection (θ3) sont égaux.

2. Injecteur d'oxydant pour un moteur d'un moteur-fusée hybride selon la revendication 1, **caractérisé en ce que**:
les canaux d'injection secondaires vers l'avant (321) sont inclinés dans le sens des aiguilles d'une montre le long de l'axe (311), et les canaux d'injection secondaires vers l'arrière (331) sont inclinés dans le sens inverse des aiguilles d'une montre le long de l'axe (311).

3. Injecteur d'oxydant pour un moteur d'un moteur-fusée hybride, comprenant
un corps (30) présentant un passage d'alimentation (31), une pluralité de trous de communication pénétrant dans le passage d'alimentation (31), un premier ensemble de canaux d'injection secondaires (32) et un second ensemble de de canaux d'injection secondaires (33), dans lequel le premier ensemble de canaux d'injection secondaires (32) présente une pluralité de canaux d'injection secondaires vers l'avant (321) et le second ensemble de canaux d'injection secondaires (33) présente une pluralité de canaux d'injection secondaires vers l'arrière (331), chacune des canaux d'injection secondaires vers l'avant (321) et des canaux d'injection secondaires vers l'arrière (331) s'étend le long de la direction radiale du corps (30),
dans lequel une pluralité de premiers tuyaux traversants (36) et une pluralité de seconds tuyaux traversants (37) sont respectivement connectés à une surface de paroi extérieure (35) du corps (30), chacun des premiers tuyaux traversants (36) communique avec chacun des canaux d'injection secondaires vers l'avant (321) respectivement, et est disposé le long d'une première direction d'injection vers avant (U'), chacun des seconds tuyaux traversants (37) communique avec chacun des canaux d'injection secondaires vers l'arrière (331), et est disposé le long d'une première direction d'injection vers l'arrière (U"), le passage d'alimentation (31) présentant un axe (311), la première direction d'injection vers l'avant (U') et la première direction d'injection vers l'arrière (U") s'étendant et une position d'intersection dans la direction de l'axe (311) étant un point d'intersection (A), et une direction d'extension du point d'intersection (A) par rapport à l'axe (311) étant un axe central (L), un angle vers l'avant (θ1) étant formé entre la première direction d'injection vers l'avant (U') et l'axe central (L), un angle vers l'arrière (θ2) étant formé entre la première direction d'injection vers l'arrière (U") et l'axe central (L), et une valeur absolue de l'angle vers l'avant (θ1) et une valeur absolue de l'angle vers l'arrière (θ2) étant égales.

4. Injecteur d'oxydant pour un moteur d'un moteur-fusée hybride selon la revendication 1, 2 ou 3, dans lequel la valeur absolue de l'angle vers l'avant (θ1) et la valeur absolue de l'angle vers l'arrière (θ2) sont entre 20 et 80 degrés.

5. Injecteur d'oxydant pour un moteur d'un moteur-fusée hybride selon la revendication 1 ou 2, dans lequel l'angle d'injection (θ3) est entre 20 et 90 degrés.

6. Injecteur d'oxydant pour un moteur d'un moteur-fusée hybride selon la revendication 1 ou 2, dans lequel une chambre de combustion (20) présente une cloison (22) entourant et définissant un orifice de combustion (21), une extrémité de la cloison (22) est disposée avec un injecteur d'oxydant, et une autre extrémité opposée à l'injecteur d'oxydant est disposée avec une buse (40), une direction de l'injecteur d'oxydant s'étendant vers la buse (40) est un axe (311) ; un segment de carburant solide (50) est installé dans l'orifice de combustion (21) et situé sur la cloison (22), sur le segment de carburant solide (50), est disposé avec une pluralité de saillies (51) le long de l'axe (311), la saillie (51) présente une surface supérieure de saillie (511), et une première distance (M1) est entre la surface supérieure de saillie (511) et la cloison (22), un évidement (52) est formé entre chacune des deux saillies (51), l'évidement (52) présente une surface supérieure d'évidement (521), une seconde distance (M2) est entre la surface supérieure d'évidement (521) et la cloison (22), et la première distance (M1) est supérieure à la seconde distance (M2).

7. Injecteur d'oxydant pour un moteur d'un moteur-fusée hybride selon la revendication 6, dans lequel la buse (40) présente un col de buse, le col de buse présente une longueur radiale (W1) s'étendant le long d'une direction radiale, une longueur de la première distance (M1) est de 10 % à 50 % de la longueur radiale (W1).

8. Injecteur d'oxydant pour un moteur d'un moteur-fusée hybride selon la revendication 6, dans lequel chacune des surfaces supérieures de saillie (511) présente respectivement une première longueur (N1) le long de la direction d'extension, et une extrémité de la chambre de combustion (20) s'étendant vers une autre extrémité est une seconde longueur (N2), et une longueur totale des premières longueurs (N1) est de 5 % à 25 % d'une longueur totale de la seconde longueur (N2).

9. Injecteur d'oxydant pour un moteur d'un moteur-fusée hybride selon la revendication 6, dans lequel la valeur absolue de l'angle vers l'avant (θ1) et la valeur absolue de l'angle vers l'arrière (θ2) sont entre 20 et 80 degrés ; le corps (30) présente une surface de paroi intérieure (34) faisant face au passage d'alimentation (31), et l'angle d'injection (θ3) est entre 20 et 90 degrés.
